# EUROPEAN PATENT APPLICATION

(11) **EP 4 649 815 A1**
(43) Date of publication of application: **19.11.2025**
(21) Application number: 25175588.0
(22) Date of filing: 12.05.2025
(51) Int. Cl.: A01F 12/44, A01D 41/127

(54) **AGRICULTURAL COMBINE GRAIN CLEANING SIEVE WITH INDEPENDENTLY ROTATABLE LOUVERS**

(30) Priority: 17.05.2024 US 202418667123
(71) Applicant: CNH Industrial America LLC, New Holland, PA 17557 (US)
(72) Inventor: Garrett, Robert, New Holland, 17557 (US); Deichmann, Scott, New Holland, 17557 (US); Jones, Robert, New Holland, 17557 (US); Harmon, Zachary, New Holland, 17557 (US); Woodward, Seth, New Holland, 17557 (US)
(74) Representative: CNH Industrial IP Department

(57) **Abstract**

A progressive sieve assembly (24) for an agricultural vehicle (20) includes a sieve (24) having a frame (64), a first subset of louvers (56) that are pivotably connected to the frame (64), and a second subset of louvers (58) that are also pivotably connected to the frame (64). The second subset of louvers (58) are positioned downstream of the first subset of louvers (56) as viewed in a direction of travel of grain across the sieve assembly (24). The first subset of louvers (56) are configured to pivot independently of the second subset of louvers (58), and the second subset of louvers (58) are configured to pivot independently of the first subset of louvers (56).

## Description

### FIELD OF THE INVENTION

The present invention relates generally to a sieve for a grain cleaning system of an agricultural combine, and, more particularly, including a spacing system providing enhanced adjustability, including capacities for quickly and easily varying a spacing between rows, and angular orientation of the fingers, for better customizing the sieve for a particular grain size and other conditions.

### BACKGROUND OF THE INVENTION

As is described in U.S. Patent App. Pub. No. 20100113113 (the '113 Pub.), agricultural combines typically have a rotary threshing or separating system for separating grain from such other crop elements or portions. In general, a rotary threshing or separating system includes one or more rotors, which can extend axially (front to rear) or transversely within the body of the combine, and which are partially or fully surrounded by a perforated concave. The crop material is threshed and separated by the rotation of the rotor within the concave, and the separated grain, together with some particles, such as chaff, dust, straw, and crop residue collectively referred to as material other than grain (MOG), are discharged through the perforations of the concave so as to fall onto a grain bed or pan, or so as to fall directly onto the cleaning system itself.

Cleaning systems further separate the grain from MOG and typically include a fan directing an air flow stream upwardly and rearwardly through one or more fore to aft reciprocating sieves, typically two, including an upper sieve also referred to as a chaffer, which is more open or coarse, and a lower sieve which is more closed or fine. The air flow stream operates to lift and carry the lighter elements of the MOG towards the rear end of the combine for discharge therefrom. Clean grain, being heavier, and larger pieces of MOG, which are not carried away by the air flow stream, will fall onto the surface of the upper sieve where some or all of the clean grain passes through to the lower, finer sieve. Grain and MOG remaining on the sieve surfaces are physically separated by the reciprocal action of the sieves as the material moves rearwardly there along. Any grain and/or MOG remaining on the surface of the upper sieve are discharged at the rear of the combine, while grain and/MOG on the lower sieve may be conveyed to an internal tailings system for reprocessing.

The quantity of clean grain and MOG passing through the sieves is typically controllable, in part, by varying the opening size of the sieves. To this end, sieves include rows of fingers, each row supported on an elongate element such as a shaft, together referred to as a slat or louver, which is typically rotatable about a longitudinal axis therethrough for setting a sieve size or gap. A typical sieve includes an adjusting member which contacts all of the louvers. Modern combines use a linkage and/or cable arrangement connected between the adjusting member and one or more manually or automatically movable adjusting elements or adjustors, in the latter instance, which can be moved by an actuator driven by an electrical, fluid, or other controller for moving the linkage or cable arrangement and member and thus changing the angular orientation of the louvers and as a result, the opening size.

The adjacent rows of fingers define laterally extending grain passages between confronting surfaces of adjacent rows of fingers. Rotating the longitudinal elements or shafts rotates the rows of fingers through various angular positions, to increase or decrease the opening size of the passages between the adjacent rows. Thus, material passes through the sieve by falling generally vertically through the spaces between the fingers or by entering the passages between the rows and falling through at the angle defined by the angular position of the rows of fingers as the sieve is reciprocated.

Generally, as the rows of fingers are rotated more towards a vertical orientation, the opening size of the passages between the rows is increased to allow more crop material to fall through the sieve through the lateral passages. Also, upward air flow through the sieve will typically be higher as a result of the larger opening size and less restriction. And, because the fingers are more vertical, the grain passages through the sieve are more vertical, so that grain flow through the sieve will be faster and more direct. If the opening size of the passages is too large, a downside is that an increased amount of MOG will be allowed to pass through the sieve. Conversely, as the rows of fingers are rotated more towards a horizontal orientation, the opening size of the passages between the rows is decreased to allow less crop material to fall through the sieve. Because opening size is smaller, upward air flow through the sieve will typically be lower. The grain passages will also be more horizontal, such that grain flow will be longer and less direct, compared to a more vertical orientation. If the opening size of the passages is too small, less MOG is allowed to pass through the sieve, but less clean grain falls through the sieve as well. Therefore, if the sieve passages are opened too much, increased MOG is allowed therethrough, and if the sieve passages are opened too little, less MOG passes therethrough, but grain throughput is reduced.

Often, the sieve setting will be selected for a particular grain variety and other conditions, and the fan speed will be adjusted to achieve an acceptable grain loss level, that is, grain not allowed through the sieve and which is detected as it is discharged past the rear edge of the sieve. In this regard, operators will commonly not be able to achieve optimal grain loss levels of zero or almost zero, and will tolerate greater grain loss than could be attained by adjusting just sieve opening size and fan speed, because minimizing grain loss will often entail opening the upper sieve or chaffer to such an extent that a large amount of MOG will pass therethrough onto the lower sieve, and will be directed by that sieve to the tailings system for reprocessing, sometimes repeatedly.

Many commercially available combine sieves are configured to allow a sufficient range of adjustability of the opening size for accommodating a wide range of crops, including smaller grains such as wheat and rice, and larger grains such as corn, soybeans and other legumes. To have sufficiently large openings for passage of the largest grain sizes, the adjacent slats or louvers are adequately far apart, and will typically be opened to a relatively upstanding position. In contrast, for the smallest grains, the louvers will be positioned more horizontally or closed. As a result, the grain path through the sieve will be longer and less direct, which can negatively affect grain processing and throughput particularly under high yield conditions. A more closed position can also reduce air flow upwardly through the sieve to the region thereabove, which can reduce the cleaning or separating action in that region.

It is common to utilize different sieves for different crops, a sieve with a larger spacing between adjacent louvers for larger grains, and a sieve with smaller spacing for smaller grains. However, even with multiple sieves available it has been found that it may not always be possible to achieve the best louver spacing or opening size for every crop and crop condition. The adjacent louvers are typically uniformly spaced apart and rotated by the same angle.

Ideally while the portion of the flow of crop material including the higher density of grain and MOG is airborne en route to the forward portion of the upper sieve, the flow of air at a significantly higher air flow rate generated by the cleaning fan will be directed therethrough for separating the lighter MOG from the heavier grain such that the lighter MOG will be carried rearwardly over the upper sieve, and the heavier, smaller grain will be allowed to fall onto the upper sieve where it can fall through the spaces between the adjacent fingers of the upper sieve to the lower sieve. Thus, by virtue of the air flow through the airborne flow of crop material, some separation of grain from MOG will occur above the surface of the upper sieve, and some separation will occur on the surface of the upper sieve as a function of the opening size and reciprocation of the upper sieve. That is, under ideal conditions, lighter elements of MOG will be carried by the air flow rearwardly over the upper sieve to be discharged in a desired manner from the combine, heavier elements of MOG will be carried rearwardly by the reciprocating action of the sieves, and grain will fall through the openings of the upper sieve.

As noted above, for any sieve, the louvers are all set to the same angle of rotation, which defines the open/closed position. As the machine harvests and crop is being transported across the sieve, grain typically falls through the openings between the louvers whereas the MOG remains on top of the sieve. As the crop mat travels down the length of the sieve, the volume of grain in that crop mat decreases as the grain falls through the openings. It is envisioned that the opening size at the downstream end of the sieve should reflect the reduction in the amount of grain at the downstream end of the sieve to prevent MOG from passing through the openings at the downstream end of the sieve. Therefore, described hereinafter is a sieve for a combine grain cleaning system which limits or prevents the undesirable passage of MOG through the sieve across the entire length of the sieve.

It should be noted that the above-description is not necessarily admitted prior art.

### SUMMARY OF THE INVENTION

Described herein is an apparatus for further rotating (only) the louvers located at a particular portion (i.e., rearward, central or forward) of the sieve to permit the passage of grain through the sieve at that portion while either limiting or preventing the passage of MOG through the sieve at that portion.

According to one example, a progressive sieve assembly for an agricultural vehicle includes a sieve having a frame, a first subset of louvers that are pivotably connected to the frame, and a second subset of louvers that are also pivotably connected to the frame. The second subset of louvers are positioned downstream of the first subset of louvers as viewed in a direction of travel of grain across the sieve assembly. The first subset of louvers are configured to pivot independently of the second subset of louvers, and the second subset of louvers are configured to pivot independently of the first subset of louvers.

### BRIEF DESCRIPTION OF THE DRAWINGS

The above-mentioned and other features and advantages of this invention, and the manner of attaining them, will become more apparent and the invention will be better understood by reference to the following description of embodiments of the invention taken in conjunction with the accompanying drawings, wherein:
FIG. 1 is a side view of an agricultural combine having a cleaning system including a sieve with an adjustable spacing system.
FIG. 2 is a perspective view of a sieve of the combine of FIG. 1, showing aspects of the adjustable spacing system.
FIG. 3 is a fragmentary side view of the sieve.
FIG. 4 is a sectional view taken along line 4-4 of FIG. 3.
FIG. 5 depicts a schematic for controlling the adjustable spacing system of the combine.

Corresponding reference characters indicate corresponding parts throughout the several views. The exemplifications set out herein illustrate embodiments of the invention and such exemplifications are not to be construed as limiting the scope of the invention in any manner.

### DETAILED DESCRIPTION OF THE INVENTION

The terms "forward", "rearward", "left" and "right", when used in connection with the agricultural vehicle and/or components thereof are usually determined with reference to the direction of forward operative travel of the vehicle, but they should not be construed as limiting. The terms "longitudinal" and "transverse" are determined with reference to the fore-and-aft direction of the vehicle and are equally not to be construed as limiting. The terms upstream and downstream are usually determined with reference to the direction of the travel of crop material through the vehicle.

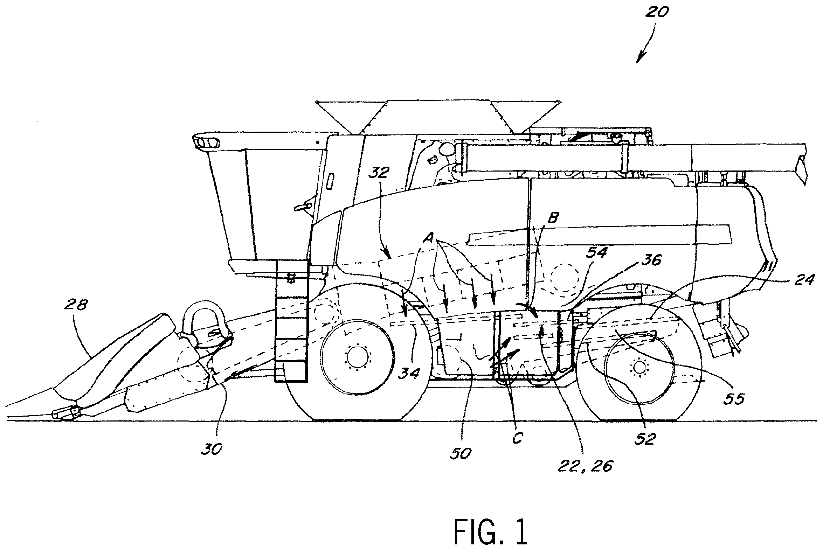

Referring now to the drawings, and more particularly to FIG. 1, wherein like numbers refer to generally like items or features, FIG. 1 shows a representative agricultural combine 20 including a cleaning system 22 having a sieve 24 with an adjustable spacing system 26. Combine 20 includes a header 28 mounted on a front end thereof operable for severing crops from a field during forward motion of combine 20 and a feeder 30 operable for conveying the cut crops to a rotary threshing and
separating system 32 within combine 20. Generally, threshing and
separating system 32 includes one or more rotors at least partially enclosed by and rotatable within a corresponding number of perforated concaves. The cut crops are threshed and separated by the rotation of the rotor within the concave, and smaller elements of crop material including grain and particles of material other than grain (MOG), including particles lighter than grain, such as chaff, dust and straw, are discharged through perforations of the concave. Larger elements, such as stalks, leaves and the like are discharged from the rear of combine 20. Smaller elements of crop material are discharged through the perforations of the concave to a grain pan 34 disposed beneath threshing and separating system 32, as denoted by arrows A, for conveyance as a flow of crop material B, to a forward region 36 of sieve 24, which is an upper sieve of cleaning system 22 incorporating adjustable spacing system 26 of the invention.

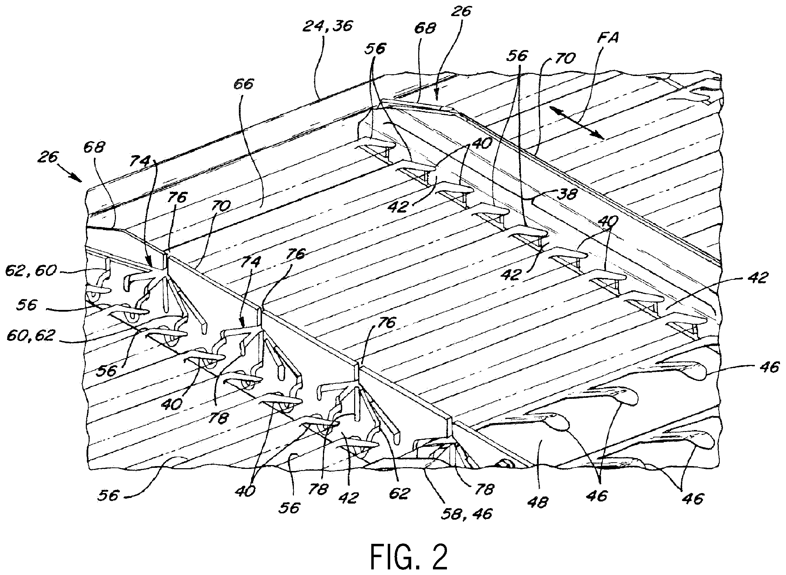

Cleaning system 22 includes a fan 50 operable for directing a flow of air C upwardly and rearwardly through openings 42 and 48 (FIG. 2) of upper sieve 24, and also through openings of a lower sieve 52 located below sieve 24, in the well-known manner. Also in the well-known manner, cleaning system 22 includes an apparatus (not shown) operable for reciprocatingly moving sieves 24 and 52, as well as grain pan 34 in the fore and aft direction FA, for propelling material thereon rearwardly.

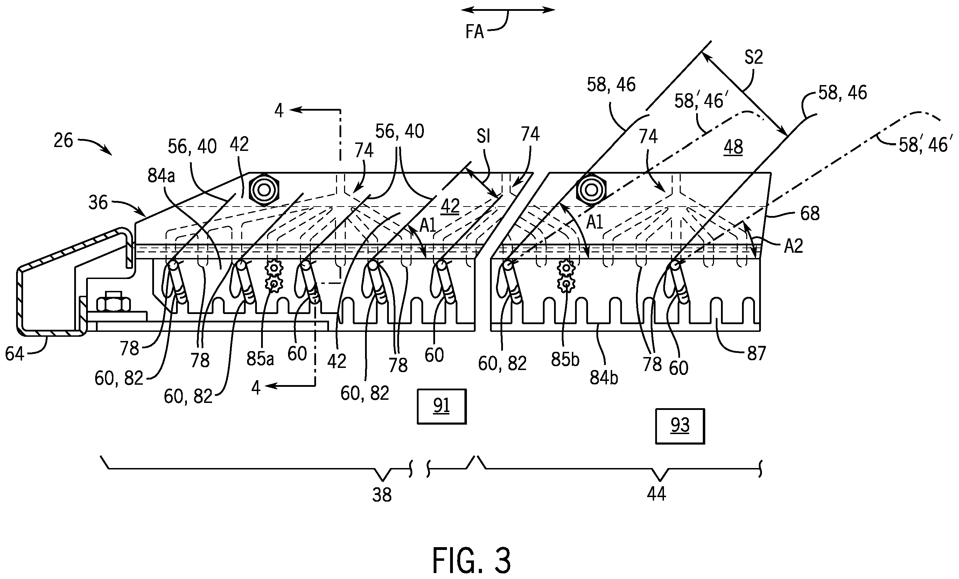

As best illustrated in FIG. 1, in operation, harvested grain will typically be delivered by pan 34 onto forward region 36 of sieve 24, in a relatively heavy stream or flow. This grain will typically be mixed with MOG, much of which will typically be lighter than the grain. As part of the grain cleaning process, air flow C will flow through this falling material, with the intent that the heavier grain mostly fall onto region 36 (comprised of fingers 40 as shown in FIGS. 2 and 3), and if sufficiently small in size, will pass downwardly through openings 42, to lower sieve 52. The lighter MOG will be carried by the air flow produced by fan 50 rearwardly through a region 54 above sieve 24 and be discharged from the rear of combine 20. Some of the heavier MOG will also drop onto region 36, or onto second region 44, and can pass through openings 42 or 48 if sufficiently small, and otherwise will be carried rearwardly by the reciprocating action of sieve 24 and fall over the rear edge thereof. Grain and smaller MOG that passes through sieve 24 will either be blown rearwardly though a space 55 between the sieves and discharged, or be carried rearwardly on sieve 52 and reprocessed, and the remaining grain will pass through that sieve for collection, in the well-known manner.

Turning now to the adjustable spacing system 26 shown in FIGs. 2-4, forward region 36 of sieve 24 includes a first sieve region 38, which will typically be the forwardmost end of the sieve, including rows of first louvers 56 having
fingers 40 configured and oriented to define first openings 42 therebetween. A second sieve region 44 is disposed rearwardly (and downstream) of first sieve region 38 and includes rows of second louvers 58 having fingers 46 configured and oriented to define second openings 48 therebetween. First openings 42 may be smaller than second openings 48 in at least the fore and aft direction FA (or vice versa), by dimensions measured and represented by S1 and S2, respectively (FIG. 3). Opening 42 and 48 define grain flow passages through sieve 24, dimensions S1 and S2 being selected for setting a maximum grain size that can pass through that passage.

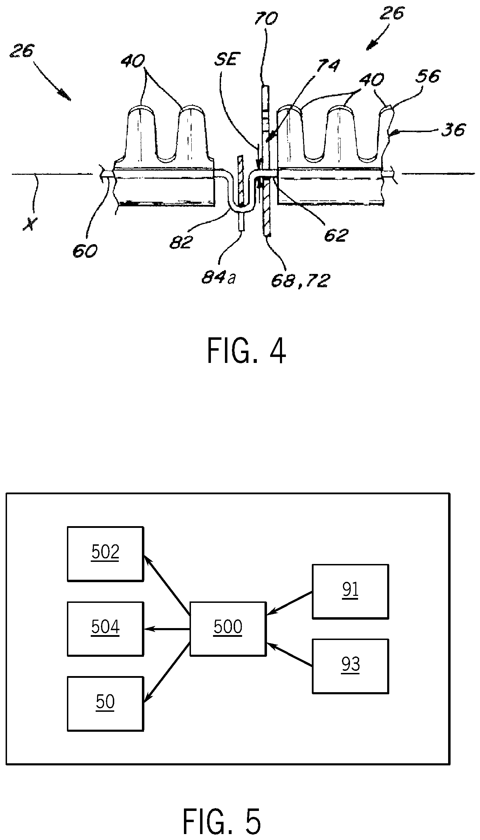

The sieve 24 is constructed of a plurality of louvers 56 and 58, each louver 56 and 58 including a shaft 60 of metal wire or other suitable construction carrying a plurality of fingers 40 or 46, respectively, of suitable material such as sheet metal or plastics extending sidewardly therefrom at spaced apart locations there along. Louvers 56 and 58 may have different lengths and shapes (as shown), or louvers 56 and 58 may be identical. Each shaft 60 has at least one mounting portion 62 of a predetermined sectional extent SE for supporting an adjacent region of the louver. The sieve includes a frame 64 of sheet metal or other suitable construction bounding a grain flow region 66, frame 64 including at least one elongate support element 68 of sheet metal or the like including laterally spaced apart longitudinally extending first and second edges 70 and 72 (FIG. 4), and a plurality of laterally extending arrays of slots 74 at longitudinally spaced locations along support element 68. The slots 74 are optional features of the sieve 24.

Each of the arrays of slots 74 includes an entry slot 76 disposed along first
edge 70 of support element 68, a plurality of adjusting slots 78 spaced longitudinally apart and extending toward second edge 72, and a plurality of connecting slots 80 extending between and connecting entry slot 76 and adjusting slots 78 of the array. Each of the slots 76, 78 and 80 is configured for receiving a mounting portion 62 of one or more of louvers 56 and 58, that is, it has a width marginally larger than sectional extent SE of mounting portions 62, such that mounting portions 62 of individual ones of shafts 60 are receivable in any of adjusting slots 78 for positioning the louvers in spaced apart relation in grain flow region 66.

Mounting portions 62, when so received, are also preferably rotatable within slots 76, 78, and 80, to allow adjusting the angular orientation of fingers 40 and 46 for achieving desired grain passage size, e.g., increasing or decreasing S1 and S2, as well as affecting air flow through the sieve. To achieve this, shafts 60 preferably include adjusting portions 82, which here are eccentric to axes X through shafts 60 (FIG. 4).

Sieve 24 includes elongate adjusting members 84a and 84b disposed for engaging adjusting portions 82 when mounting portions 62 are disposed in adjusting slots 78, respectively, to enable simultaneously rotating shafts 60 about axes X therethrough, respectively, for varying an angular position (see, e.g., angles A1 and A2) of the fingers of the louvers, for adjusting sizes of openings S1 and S2. Adjusting member 84a is assigned to the louvers 56 of first sieve region 38 for rotating that set of louvers, whereas adjusting member 84b is assigned to the louvers 58 of second sieve region 44 for rotating that set of louvers. Adjusting members 84a and 84b may each be an elongate member of sheet metal or other suitable construction and includes upwardly facing slots 87 positionable in alignment with adjusting slots 78 for jointly receiving adjusting portions 82, there being a sufficient number of slots 87 in the adjusting member to enable selecting any of the adjusting slots 78.

The adjusting portions 82 of louvers 56 are positioned within the slots 78 of adjusting member 84a, and the adjusting portions 82 of louvers 58 are positioned within the slots 78 of adjusting member 84b. As is described below, adjusting members 84a and 84b are independently moveable. Accordingly, it is possible to independently rotate the two sets of louvers 56 and 58 about their axes X. In other words, it is possible to simultaneously rotate one set of louvers 56 relative to the other set of louvers 58.

The adjusting members 84a and 84b are independently movable longitudinally in direction FA for effecting the rotation of shafts 60. According to one example, a gear set 85a is associated with adjusting member 84a for translating adjusting member 84a along direction FA. Gear set 85a is a pair of meshed gears, one of which is rotatably mounted to adjusting member 84a and the other of which is rotatably mounted to elongate support member 68 (or other surface that is stationary with respect to adjusting member 84a). One of the gears 85a is a driving gear and the other gear is a driven gear. Similar to gear set 85a, another gear set 85b is associated with adjusting member 84b for independently translating adjusting member 84b along direction FA.

For each gear set, the driving gear may be mechanically connected to an output shaft of a separate electric motor, for example. Other mechanisms for accomplishing translation of adjusting member 84a and 84b are envisioned, such as an actuator, solenoid, cable, linkage, lever, for example. The aforementioned motor, actuator, solenoid, cable, linkage, lever, etc. may be referred to herein a means for moving (or translating) the adjusting members 84a, 84b. The means may be operated either automatically (e.g., electric motor) or manually (e.g., manual lever). The automatic means may be operated electrically, mechanically, pneumatically, or hydraulically, for example.

Independent translation of adjusting members 84a and 84b results in rotation of louvers 56 and 58, respectively, about axis 60. In FIG. 3, the louvers 58 are shown rotated to two different positions. In the first (solid line) position of louvers 58, the louvers 58 are rotated to an angle A1 that is equal to the rotated angle A1 of the louvers 56. In the second (broken line) position of louvers 58', the louvers 58' are rotated to angle A2, which differs from angle A1. Accordingly, louvers 58 and 56 may be rotated to different angles. Although only two different groups of independently rotatable louvers 56 and 58 are shown in Fig. 3, it should be understood that sieve 24 could include any number of groups of independently rotatable louvers. As another alternative, every louver 56, 58 may be independently rotatable.

A sieve having openings that progressively change in size as viewed along the length of the sieve, is referred to herein as a progressive sieve. The opening size may decrease (or increase) along the downstream length of the sieve. As the crop material is being conveyed across the sieve, the amount of grain present in the crop mat decreases, and the progressive sieve reflects this condition. Employing a progressive sieve prevents MOG from passing through the sieve and creating a dirty grain sample. Employing a progressive sieve aids in all crop conditions, but is most beneficial for lower yielding fields where the full area of the cleaning system is not required. Employing a progressive sieve could also decrease the effective cleaning system area in lower yielding crops to help with grain sample, and cleaning system efficiency.

Grain sensors 91 and 93 are located under the sieve. It should be understood at the outlet that the grain sensors are optional components of the adjustable spacing system 26. Grain sensor 91 tracks the grain falling between the louvers 56 of first sieve region 38, whereas grain sensor 93 tracks the grain falling between the louvers 58 of second sieve region 44. Both sensors 91 and 93 may be connected to a processor/controller that is also connected to the motors responsible for rotating the louvers 56 and 58 about their respective axes. In operation, as grain sensor 93 detects a reduction in grain falling between louvers 58, the processor/controller activates a motor to independently rotate louvers 58 so that those louvers 58 progressively close to prevent MOG from falling between the louvers 58. The adjustable spacing system 26 could also be controlled by yield monitor data. It is envisioned that the adjustable spacing system 26 could result in power savings, because the system could reduce the speed of fan 50 as the sieves 58 progressively close because less air flow is needed to suspend the crop material.

FIG. 5 depicts a high-level schematic of the aforementioned system, whereby the controller 500 communicates with the sensors 91 and 93, the motors 502 and 504 that cause translation of the adjusting members 84a and 84b (respectively), and the motor of the cleaning fan 50.

It is to be understood that the operational steps are performed by the controller 500 upon loading and executing software code or instructions which are tangibly stored on a tangible computer readable medium, such as on a magnetic medium, e.g., a computer hard drive, an optical medium, e.g., an optical disc, solid-state memory, e.g., flash memory, or other storage media known in the art. Thus, any of the functionality performed by the controller described herein is implemented in software code or instructions which are tangibly stored on a tangible computer readable medium. Upon loading and executing such software code or instructions by the controller, the controller may perform any of the functionality of the controller described herein, including any steps of the methods described herein.

The term "software code" or "code" used herein refers to any instructions or set of instructions that influence the operation of a computer or controller. They may exist in a computer-executable form, such as machine code, which is the set of instructions and data directly executed by a computer's central processing unit or by a controller, a human-understandable form, such as source code, which may be compiled in order to be executed by a computer's central processing unit or by a controller, or an intermediate form, such as object code, which is produced by a compiler. As used herein, the term "software code" or "code" also includes any human-understandable computer instructions or set of instructions, e.g., a script, that may be executed on the fly with the aid of an interpreter executed by a computer's central processing unit or by a controller.

## Claims

1. A progressive sieve assembly (24) for an agricultural vehicle (20), said progressive sieve assembly comprising:
a sieve (24) comprising a frame (64), a first subset of louvers (56) that are pivotably connected to the frame, and a second subset of louvers (58) that are also pivotably connected to the frame, wherein the second subset of louvers (58) are positioned downstream of the first subset of louvers as viewed in a direction of travel of grain across the sieve assembly.
***characterized in that*** the first subset of louvers (56) is configured to pivot independently of the second subset of louvers (58), and the second subset of louvers is configured to pivot independently of the first subset of louvers.

2. The progressive sieve assembly of claim 1, wherein first openings (42) are disposed between adjacent louvers of the first subset of louvers (56), the first openings having a uniform first dimension (S1) as viewed in a fore-to-aft direction of the agricultural vehicle, and wherein second openings (48) are disposed between adjacent louvers of the second subset of louvers (58), the second openings having a uniform second dimension (S2) as viewed in the fore-to-aft direction, wherein the uniform second dimension differs from the uniform first dimension.

3. The progressive sieve assembly of claim 2, wherein the uniform first and second dimensions (S1, S2) represent an opening through which grain passes between adjacent louvers.

4. The progressive sieve assembly of claim 2 or claim 3, wherein the uniform second dimension (S2) is less than the uniform first dimension (S1).

5. The progressive sieve assembly of any one of the foregoing claims, wherein each louver of the first subset of louvers (56) is uniformly disposed at first rotational angle (A1) and each louver of the second subset of louvers (58) is uniformly disposed at second rotational angle (A2) that differs from the first rotational angle (A1).

6. The progressive sieve assembly of claim 5, wherein the second rotational angle (A2) is less than the first rotational angle (A1).

7. The progressive sieve assembly of any one of the foregoing claims, wherein the first subset of louvers (56) is attached to a first translatable elongate adjusting member (84a), and the second subset of louvers (58) is attached to a second elongate translatable adjusting member (84b), wherein the first and second elongate adjusting members are independently moveable, wherein translation of the first and second elongate translatable adjusting member causes movement of the first and second subsets of louvers, respectively.

8. The progressive sieve assembly of claim 7, further comprising a first means (85a) for moving the first translatable elongate adjusting member (84a), and a second means (85b) for moving the second translatable elongate adjusting member (84b).

9. The progressive sieve assembly of claim 8, wherein the first and second means (85a, 85b) are independently controlled motors.

10. The progressive sieve assembly of claim 9, wherein, for each motor (85a, 85b), an output shaft (85a, 85b) of the motor is connected to a gear that is attached to one of the translatable elongate adjusting members (84a, 84b) such that rotation of the output shaft causes translation of said one of the translatable elongate adjusting members (84a, 84b).

11. The progressive sieve assembly of any one of the foregoing claims wherein the progressive sieve assembly constitutes an upper sieve of the agricultural vehicle.

12. The progressive sieve assembly of any one of the foregoing claims, further comprising a first means (85a) for moving the first subset of louvers (56), and a second means (85b) for moving the second set of louvers (58).

13. The progressive sieve assembly of claim 12 further comprising a first sensor (91) for sensing grain passing between louvers of the first subset of louvers (56), and a second sensor (93) for sensing grain passing between louvers of the second subset of louvers (58), wherein the first and second sensors communicate with a controller (500), and the controller is configured to independently activate the first and second means (85a, 85b) based upon readings of the first and second sensors, respectively.

14. An agricultural harvester (20) comprising the progressive sieve assembly (24) of claim 13, wherein the agricultural harvester further comprises a cleaning fan (50) positioned to distribute a stream of air across the progressive sieve assembly, wherein the controller (500) is further configured to control a speed of the cleaning fan based upon the readings of the first and second sensors (91, 93).

15. An agricultural harvester (20) comprising the progressive sieve assembly (24) of any one of the foregoing claims.
